# EUROPÄISCHE PATENTSCHRIFT

(11) **EP 1 065 093 B1**
(45) Veröffentlichungstag und Bekanntmachung des Hinweises auf die Patenterteilung: **14.10.2009**
(21) Anmeldenummer: 00112898.2
(22) Anmeldetag: 19.06.2000
(51) Int. Cl.: B60M 1/20

(54) **Schwenkausleger für Oberleitungsanlagen**
Hinged cantilever for catenary system
Bras pivotant pour système de suspension catenaire

(30) Priorität: 01.07.1999 DE 19930471
(43) Veröffentlichungstag der Anmeldung: 03.01.2001
(73) Patentinhaber: SIEMENS AKTIENGESELLSCHAFT, 80333 München (DE)
(72) Erfinder: Ungvari, Stefan, Dipl.-Ing., 91356 Kirchehrenbach (DE)

(56) Entgegenhaltungen:
- DE-B- 1 092 056
- FR-A- 568 695
- FR-A- 883 331

## Beschreibung

Die Erfindung bezieht sich auf einen Schwenkausleger für Kettenwerk-Oberleitungsanlagen entsprechend dem Oberbegriff des Patentanspruches 1.

Schwenkausleger für Kettenwerk-Oberleitungsanlagen haben die Aufgabe, einerseits den Fahrdraht und das Tragseil zu tragen, andererseits Fahrdraht und Drahtseil entsprechend der Gleitführung in einer vorgegebenen Lage zu halten. Die Schwenkausleger sind in der Regel dreh- und schwenkbar an den vorgesehenen Tragelementen (Masten) gehaltert, damit sie bei Temperaturschwankungen den damit zusammenhängenden Bewegungen des Kettenwerkes folgen können. Es versteht sich, daß die Schwenkausleger nicht nur gegenüber dem Fahrdraht, sondern auch gegenüber den Tragelementen, an denen sie angeordnet sind, elektrisch isoliert ausgeführt sein müssen.

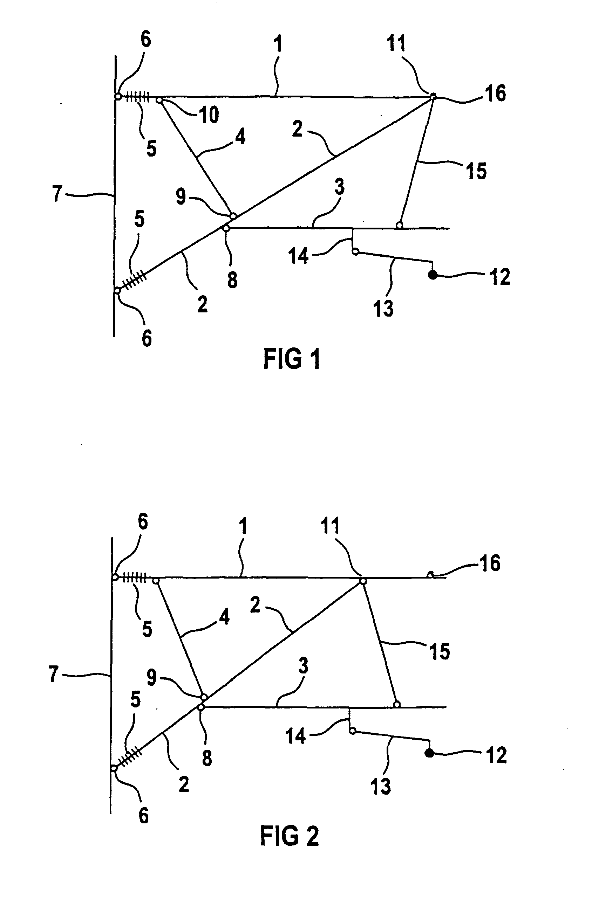

Schwenkausleger bekannter Bauart, wie sie in den Figuren 1 und 2 der Zeichnung schematisch dargestellt sind, werden aus Stäben gebildet, die mit Gußarmaturen verbunden sind. Solche Ausführungen sind insbesondere bezüglich Lieferung und Montage relativ kostenintensiv. Die gelenkige Verbindung mit den Armaturen ist außerdem statisch nachteilig und erfordert einen erhöhten Materialeinsatz bei den Stäben. Nachteilig ist ferner auch, daß ein vollständiger Ausgleich der Mast- und Fundamenttoleranzen am Schwenkausleger nicht möglich ist. An jedem Mast ist nämlich nach Aufmaß der Istlage der Schwenkausleger individuell zu berechnen und zuzuschneiden. Außerdem müssen alle Kettenwerkshänger nach der Istlage der Tragseilklemmen angefertigt werden.

Schwenkausleger bisherigen Bauarten sind somit nur in Einzelanfertigung zu erstellen, was mit relativ hohen Kosten für den Schwenkausleger und die Hänger unter Baustellenbedingungen sowie mit zusätzlichen Kosten durch Aufmaße und Berechnungen verbunden ist.

In DE-PS 601 185 ist ein Ausleger für Fahrleitungen von Schienenfahrzeugen beschrieben. Der Ausleger besteht aus einem Zugseil und einer Druckstrebe, deren zum Mast gerichtete Enden mit einem Isolator verbunden sind. Um bei einem Bruch des Druckstrebenisolators ein Ausschwenken des Auslegers in das vorbeifahrende Fahrzeug zu unterbinden, ist ein einerseits am Zugseil und andererseits an der Druckstrebe befestigtes Sicherungsseil vorgesehen. Ausleger dieser Bauart sind zwar einfach aufgebaut, sie sind jedoch keinen hohen Belastungen aussetzbar.

In US-PS 5 772 158 ist ein Tragsystem für diverse oberirdisch verlegbare Energie-, Kommunikations- und Televisions-Übertragungsleitungen offenbart. Das Tragsystem umfasst einen an einem Mast befestigbaren, trapezförmigen Ausleger der aus fest miteinander verbundenen Rohren gebildet ist. An dem einen, dem Mast abgewandten vertikalen Rohr ist ein Abstandshalter für die Leitungen gehaltert. Das beschriebene Tragsystem ist nicht für Oberleitungsanlagen der eingangs erläuterten Art einsetzbar.

Der im Patentanspruch 1 angegebenen Erfindung liegt die Aufgabe zugrunde, einen Schwenkausleger der eingangs genannten Gattung zu schaffen, mit dem gegenüber den bekannten Ausführungen dieser Art eine Kostensenkung in Fertigung und Montage erzielt werden kann.

Der erfindungsgemäß gestellte Schwenkausleger erlaubt es, Stäbe mit kleinerem Querschnitt zu verwenden, wodurch eine Reduzierung des Materialeinsatzes erreicht wird. Durch den Wegfall von Lieferung und Montage der Armaturen ergibt sich außerdem eine deutliche Kosteneinsparung. Durch die gemäß der Erfindung neu vorgeschlagene Einstellmöglichkeit des Schwenkauslegers wird ein vollständiger Ausgleich der Mast- bzw. Fundamenttoleranzen am Schwenkausleger sichergestellt.

Weitere Vorteile ergeben sich aus den weiteren Ansprüchen sowie der nachfolgenden Beschreibung eines Ausführungsbeispieles der Erfindung. Es zeigen:
Figuren 1 und 2 zwei Ausführungen eines Schwenkauslegers nach bisheriger Bauart,
Figur 3 eine Ausführung eines kompletten Schwenkauslegers nach der Erfindung,
Figur 4 einen Teil des in Figur 3 gezeigten Schwenkauslegers.

Die Figuren 1 und 2 zeigen in schematischer Darstellung zwei Ausführungsformen eines Schwenkauslegers nach dem Stand der Technik. Die Schwenkausleger enthalten einen Spitzenstab 1, einen Auslegerstab 2, einen Stützenstab 3 sowie einen Diagonalstab 4. Spitzenstab 1 und Auslegerstab 2 sind jeweils, unter Zwischenschaltung von Isolatoren 5, mittels Drehgelenke 6 am betreffenden Tragelement 7, z.B. an einem Mast, befestigt. Der Stützenstab 3 ist mittels eines Anschlußgelenks 8 am Auslegerstab 2 angelenkt. Mit entsprechend ausgebildeten Gelenken 9, 10 und 11 ist auch der Diagonalstab 4 am Spitzenstab 1 und am Auslegerstab 2 sowie letzterer am Spitzenstab 1 angelenkt.

Ein die Fahrdrahtklemme 12 tragender Seitenhalter 13 ist an einem am Stützenstab 3 fest angeordneten Abzugshalter 14 angelenkt. Der Stützenstab 3 wird durch ein Hängerseil 15 gehalten.

Die in Figur 2 dargestellte Variante unterscheidet sich von der in Figur 1 gezeigten dadurch, daß die Tragseilklemme 16 nicht direkt am Verbindungsgelenk 11 von Spitzenstab und Auslegerstab, sondern an einem über das Gelenk 11 hinaus verlängerten Abschnitt des Spitzenstabes 1 angeordnet ist.

Wie bereits angesprochen, werden die Teile des Schwenkauslegers aus Stäben gebildet, die an den Verbindungsstellen durch die Anschlußgelenke (8 bis 11) enthaltenden Gußarmaturen miteinander verbunden sind.

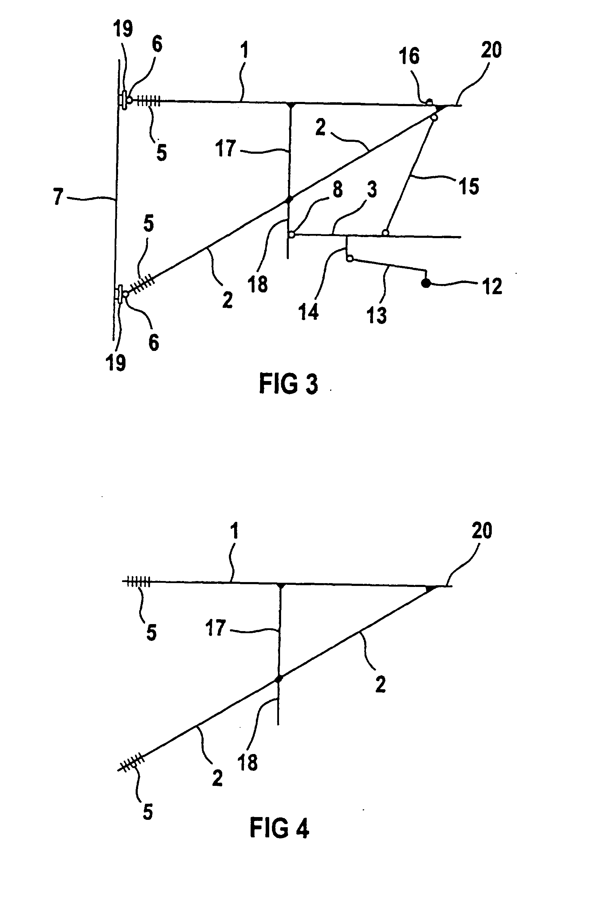

Der in Figur 3 dargestellte erfindungsgemäße Schwenkausleger enthält zwar im wesentlichen die gleichen Einzelelemente; diese sind jedoch in besonderer Weise ausgeführt und miteinander verbunden. So basiert der neue Schwenkausleger auf einem vorgefertigten Dreieckrahmen, in welchem die Isolatoren 5 bereits integriert sind. Eine so vorgefertigte Baueinheit ist in Figur 4 dargestellt.

Spitzenstab 1 und Auslegerstab 2 sind durch einen Rahmenstab 17 fest miteinander verbunden. Der den Dreiecksrahmen aussteifende Rahmenstab 17 ist rechtwinklig am Spitzenstab 1 befestigt und enthält einen verlängerten Abschnitt 18, an dem der Stützenstab 3 in vertikaler Richtung verschiebbar gehaltert ist. Mit dieser Verschiebbarkeit läßt sich im Vergleich mit einem Schwenkausleger bisheriger Bauart, entsprechend den Figuren 1 und 2, eine besonders vorteilhafte Einstellung erzielen. Bei den in den Figuren 1 und 2 gezeigten herkömmlichen Versionen ist eine gewollte vertikale Verschiebung des Stützenstabes zwangsläufig mit einer ungewollten horizontalen Verschiebung verbunden. Dieser Nachteil ist bei dem erfindungsgemäßen Schwenkausleger nicht vorhanden. Die horizontale Verschiebung der Fahrdrahtklemme 12 erfolgt wie bisher durch Verschiebung des Abzugshalters 14 am Stützenstab 3.

Die einzelnen Stäbe sind, ohne Zuhilfenahme von Verbindungs- bzw. Anschlußarmaturen, durch Schweißen, Kleben oder ähnliche Verbindungsmittel biegesteif miteinander verbunden. Durch die so geschaffene direkte Verbindung wird eine bessere Auslastung der Stäbe erzielt. Des weiteren wird die Querschnittsform der Stäbe nach dem Fluß der inneren Kräfte optimiert. Als Werkstoff für die Rahmenteile kommen sowohl Metalle als auch Kunststoffe in Frage.

Die Befestigung des gesamten Auslegers am Tragelement 7 erfolgt mittels zweier Befestigungsteile 19 (Figur 3), die so konstruiert sind, daß beide Drehgelenke 6 in der erforderlichen vertikalen Lage eingestellt werden können. Mit dieser Einstellmöglichkeit läßt sich auch die Tragseilklemme 16 und die Fahrdrahtklemme 12, für die bereits, wie oben beschrieben, durch vertikale Verschiebung des Stützenstabes 3 am verlängerten Abschnitt 18 eine Verschiebemöglichkeit besteht, in der Vertikalen einstellen.

Weitere Vorteile ergeben sich in der Verstellbarkeit der Tragseilklemme 16, die mit Hilfe einer geeigneten Klemmverbindung am Spitzenstab 1 auf diesen in horizontaler Richtung individuell verschoben werden kann. Das Profil des Spitzenstabes 1 und die Klemmverbindung sind so ausgeführt, daß die Tragseilklemme 16 nicht nur auf dem auskragenden, über den Anschlußpunkt des Auslegerstabes 2 hinaus verlängerten Abschnitt 20 des Spitzenstabes 1, sondern auch in Richtung zum Isolator 5 hin verschoben werden kann.

Die aufgezählten Einstellvarianten können sowohl jeweils einzeln als auch in beliebiger Kombination realisiert sein.

Durch die neu geschaffene Möglichkeit des vollständigen Ausgleichs der Mast- und Fundamenttoleranzen entfällt eine Einzelanfertigung des Schwenkauslegers unter Baustellenbedingungen. Durch Vorfertigung eines Standardsortiments von Schwenkauslegern und die damit verbundenen höheren Stuckzahlen, durch vereinfachte Montage am Mast, durch Reduzierung von Aufmaß- und Berechnungsarbeiten sowie durch Wegfall von Verbindungs- bzw. Anschlußarmaturen lassen sich deutliche Kostenvorteile erzielen.

## Patentansprüche

1. Schwenkausleger für Oberleitungsanlagen, der mindestens einen an einem Tragelement (7) angelenkten Spitzenstab (1), einen ebenfalls am Tragelement angelenkten und mit dem Spitzenstab verbundenen Auslegerstab (2), einen die beiden Stäbe (1, 2) miteinander verbindenden weiteren Stab (4, 17) sowie einen Stützenstab (3) aufweist, **dadurch gekennzeichnet, daß** Spitzenstab (1), Auslegerstab (2) und der weitere Stab (17) einen starr miteinander verbundenen Dreieckrahmen (1, 2, 17) bilden, der unter Zwischenschaltung von Isolatoren (5) am Tragelement (7) anlenkbar ist, und der weitere Stab (17) einen rechtwinklig am Spitzenstab (1) angeordneten Rahmenstab (17) bildet, der einen nach unten verlängerten, über den Auslegerstab hinausreichenden, Abschnitt (18) enthält, an dem der Stützenstab (3) verstellbar gehaltert ist.

2. Schwenkausleger nach Anspruch 1, **dadurch gekennzeichnet, daß** die Isolatoren (5) am Dreieckrahmen (1, 2, 17) integriert angeordnet sind.

3. Schwenkausleger nach Anspruch 1 oder 2, **dadurch gekennzeichnet, daß** der Spitzenstab (1) einen über den Eckpunkt des Dreieckrahmens (1, 2, 17) hinausgehenden verlängerten Abschnitt (20) enthält.

4. Schwenkausleger nach Anspruch 3, **dadurch gekennzeichnet, daß** am Spitzenstab (1), vorzugsweise am verlängerten Abschnitt (20), eine Tragseilklemme (16) verschiebbar gehaltert ist.

5. Schwenkausleger nach Anspruch 1, **dadurch gekennzeichnet, daß** der Dreieckrahmen (1, 2, 17) an seinen dem Tragelement (7) zugewandten Enden Isolatoren (5) aufweist, die mittels Anschlußgelenke (6) an einem am Tragelement (7) verstellbar angeordneten Befestigungsteil (19) gehaltert sind.

## Claims

1. Hinged cantilever for catenary systems which features at least one top rod (1) hinged on a support element (7), a cantilever rod (2) likewise hinged on the support element and connected to the top rod, a further rod (4, 17) joining the two rods (1, 2) to each other and also a support rod (3), **characterised in that** the top rod (1), cantilever rod (2) and the further rod (17) form a rigidly interconnected triangular frame (1, 2, 17), which is able to be hinged with intermediate mounting of insulators (5) on the support element (7), and the further rod (17) forms a frame rod (17) arranged at right angles on the top rod (1) which has a section (18) elongated downwards, extending beyond the cantilever rod, on which the support rod (3) is held adjustably.

2. Hinged cantilever according to claim 1, **characterised in that** the insulators (5) are arranged integrated on the triangular frame (1, 2, 17).

3. Hinged cantilever according to claim 1 or 2, **characterised in that** the top rod (1) contains an elongated section (20) extending beyond the corner point of the triangular frame (1, 2, 17).

4. Hinged cantilever according to claim 3, **characterised in that** an overhead catenary cable clamp (16) is held to allow movement on the top rod (1), preferably on the elongated section.

5. Hinged cantilever according to claim 1, **characterised in that** the triangular frame features insulators (5) at its end facing towards the support element (7) which are held by means of connecting joints (6) to an attachment part (19) adjustably mounted on the support element (7).

## Revendications

1. Bras pivotant pour des systèmes de caténaire, qui a au moins une barre ( 1 ) en pointe articulée à un élément ( 7 ) de support, une barre ( 2 ) formant bras articulée à l'élément de support et reliée à la barre en pointe, une autre barre ( 4, 17 ) reliant entre eux les deux barres ( 1, 2 ) ainsi qu'une barre ( 3 ) d'appui, **caractérisé en ce que** la barre ( 1 ) en pointe, la barre ( 2 ) formant bras et l'autre barre ( 17 ) forment, en étant reliées rigidement entre elles, un cadre ( 1,2 ) triangulaire qui peut être articulé à l'élément de support, avec interposition d'isolateurs ( 5 ), et l'autre barre ( 17 ) forme une barre ( 17 ) de cadre qui est disposée perpendiculairement à la barre ( 1 ) en pointe et qui comporte un tronçon ( 18 ) qui est prolongé vers le bas qui va au-delà de la barre formant bras et sur lequel la barre ( 3 ) d'appui est montée de manière réglable.

2. Bras pivotant suivant la revendication 1,
**caractérisé en ce que** les isolateurs ( 5 ) sont disposés de manière intégrée sur le cadre ( 1, 2, 17 ) triangulaire.

3. Bras pivotant suivant la revendication 1 ou 2, **caractérisé en ce que** la barre (1) en pointe comporte un tronçon ( 20 ) prolongé allant au-delà du sommet du cadre ( 1, 2, 17 ) rectangulaire.

4. Bras pivotant suivant la revendication 3,
**caractérisé en ce que** une pince ( 16 ) de câble porteur est montée coulissante sur le barreau ( 1 ) en pointe, de préférence sur le tronçon ( 20 ) prolongé.

5. Bras pivotant suivant la revendication 1,
**caractérisé en ce que** le cadre ( 1, 2, 17 ) triangulaire a à son extrémité tournée vers l'élément ( 7 ) de support des isolateurs qui sont montés au moyen d'articulations ( 6 ) sur une partie ( 19 ) de fixation disposée de manière réglable sur l'élément ( 7 ) de support.
